# EUROPÄISCHE PATENTSCHRIFT

(11) **EP 4 275 138 B1**
(45) Veröffentlichungstag und Bekanntmachung des Hinweises auf die Patenterteilung: **20.05.2026**
(21) Anmeldenummer: 22754823.7
(22) Anmeldetag: 20.07.2022
(51) Int. Cl.: G06F 21/64, G06F 16/23, H04L 9/32, G06F 21/51, G06F 21/57

(54) **VERFAHREN ZUR ÜBERPRÜFUNG DIGITALER SIGNATUREN, FAHRZEUG-RECHENEINHEIT UND FAHRZEUG**
METHOD FOR CHECKING DIGITAL SIGNATURES, VEHICLE COMPUTING UNIT AND VEHICLE
PROCÉDÉ DE VÉRIFICATION DE SIGNATURES NUMÉRIQUES, UNITÉ DE CALCUL DE VÉHICULE ET VÉHICULE

(30) Priorität: 27.07.2021 DE 102021003840
(43) Veröffentlichungstag der Anmeldung: 15.11.2023
(73) Patentinhaber: Mercedes-Benz Group AG, 70372 Stuttgart (DE)
(72) Erfinder: WILMER, Thorsten, 71063 Sindelfingen (DE)
(74) Vertreter: Novagraaf Group
(86) Internationale Anmeldenummer: PCT/EP2022/070300
(87) Internationale Veröffentlichungsnummer: WO 2023/006531

(56) Entgegenhaltungen:
- US-A1- 2007 192 610
- US-A1- 2013 111 212
- US-A1- 2018 113 703
- US-A1- 2018 183 605
- US-A1- 2020 314 096

## Beschreibung

Die Erfindung betrifft ein Verfahren zur Überprüfung digitaler Signaturen nach der im Oberbegriff von Anspruch 1 näher definierten Art, eine Fahrzeug-Recheneinheit mit einem Flash-Speicher, sowie ein Fahrzeug mit einer solchen Fahrzeug-Recheneinheit.

Mit zunehmender Digitalisierung nimmt auch ein Automatisierungsgrad von Fahrzeugen zu. Fahrzeuge weisen hierzu mehr und mehr, sowie immer komplexere Recheneinheiten zur Auswertung von Sensorsignalen und Berechnung von Steuergrößen auf. Zur Bereitstellung ihrer Funktionalität wird von solchen Recheneinheiten ein maschinenlesbarer Code ausgeführt. Dieser Code ist in Form von Software auf physikalischen Datenspeichern abgelegt. Zum Einspielen neuer Funktionalitäten, Beseitigung von Bugs und/oder zum Schließen von Sicherheitslücken wird solche Software mittels eines Softwareupdates aktualisiert.

Beim initialen Hochfahren einer Fahrzeugrecheneinheit, dies kann beispielsweise beim Starten des Fahrzeugs geschehen, werden Daten aus dem physikalischen Datenspeicher ausgelesen. Beim Einspielen von Softwareaktualisierungen können zudem Daten nicht nur gelesen sondern auch überschrieben bzw. gelöscht werden. Zur Verhinderung der Kompromittierung der Recheneinheit bzw. der im physikalischen Datenspeicher abgelegten Daten, werden dabei typischerweise die Daten mit einer digitalen Signatur versehen, mittels welcher erkannt werden kann, ob die Daten durch Dritte manipuliert wurden bzw. ob ein Softwareupdate von einem vertrauensvollen Absender stammt. Hierdurch lässt sich gewährleisten, dass auf einem Prozessor der Recheneinheit lediglich Code aus vertrauenswürdigen Quellen ausgeführt wird.

Eine digitaler Signaturen zugrunde liegende Technik ist das Errechnen sogenannter Hash-Werte. Zur Berechnung eines Hash-Werts werden beliebige Daten wie beispielsweise ein Textdokument, ein Bild, eine E-Mail, ein Programmcode oder Programmcodebaustein oder dergleichen als Eingangsgröße für eine mathematische Funktion genutzt, welche aus den entsprechenden Daten eine beliebig lange Ziffernfolge errechnet. Die Ziffernfolge kann Zahlen und/oder auch Buchstaben umfassen. Die hierzu verwendete mathematische Funktion wird auch als Hashfunktion bezeichnet und ist idealerweise deterministisch. Das heißt, durch das Verwenden derselben Eingangsdaten wird mit Hilfe einer bestimmten Hashfunktion immer dasselbe Ergebnis, sprich der gleiche Hash-Wert, berechnet. Eine Hashfunktion sollte dabei so mächtig sein, dass keine unterschiedlichen Daten existieren, die zum selben Hash-Wert führen können.

Mit Hilfe von Prüfsummen wird überprüft, ob in einem Speicherelement eines physikalischen Datenspeichers abgelegte Daten "richtig" geschrieben wurden. Dies wird als zyklische Redundanzprüfung (CRC) bezeichnet. So kann es beim Schreiben und/oder Lesen der Daten aus dem Datenspeicher zu Fehlern kommen, wodurch die Daten falsch ausgelesen bzw. geschrieben werden. CRC ist zur Erkennung zufälliger Fehler geeignet. Soll zusätzlich eine Integrität der Daten überprüft werden, so sind anstelle von Prüfsummen kryptografische Hashfunktionen anzuwenden. Hierzu wird aus den geschriebenen bzw. gelesenen Daten ein Hash gebildet und mit einem Vergleichs-Hash verglichen. Dabei zwischen Systemen ausgetauschte Hashes können gemäß bewährter Signaturprüfverfahren verschlüsselt übertragen werden. Stimmen die beiden Hashs überein, so bedeutet dies, dass die Daten korrekt geschrieben bzw. gelesen wurden. Das Prüfen der Daten ist allerdings vergleichsweise zeitaufwändig, da bei jeder Prüfung ein Hash-Wert über die entsprechenden Daten gebildet werden muss.

Zum Speichern von Daten sind verschiedene Speichermedien wie Festplatten oder Flash-Speicher bekannt. Verteilte Geräte wie eingebettete Systeme, beispielsweise ein Fahrzeugsteuergerät, verwenden typischerweise Flash-Speicher zum Speichern relevanter Daten. Ein solcher Flash-Speicher kann dabei auch fest in eine Recheneinheit integriert sein, wie beispielsweise bei einem System on a Chip (SOC). Ein solcher Flash-Speicher umfasst wenigstens ein Speicherelement zum Ablegen der Daten sowie einen Speicher-Controller zum Adressieren des jeweiligen Speicherelements. Das Speicherelement wiederum weist den Aufbau aus Blöcken und Seiten auf. Dabei umfasst das Speicherelement eine Vielzahl von Blöcken, welche wiederum jeweils eine Vielzahl von Seiten umfassen. Daten werden im Flash-Speicher seitenweise gespeichert und blockweise gelöscht.

Aus der DE 10 2020 117 552 A1 sind sichere Hybrid-Boot-Systeme und sichere Boot-Verfahren für Hybrid-Systeme bekannt. Ein solches Hybrid-System umfasst mehrere verschiedene Sub-Systeme, wobei jedes Sub-System eine eigene Speichervorrichtung zum Speichern von Software, sowie eine eigene CPU, sprich einen Prozessor, zum Ausführen der Software aufweist. Zur Erhöhung der Cybersicherheit erfolgt eine signaturbasierte Authentizitätsvalidierungsprüfung der auf verschiedenen Speichervorrichtungen umfassten Software während eines Boot-Vorgangs eines entsprechenden Sub-Systems bzw. einer entsprechenden Hybridvorrichtung. Ein solches Boot-Verfahren sieht vor, dass ein erstes Sub-System eine erste Signatur aufweist, welche einem ersten Hash der auf dem ersten Sub-System in der Speichervorrichtung gespeicherten Software entspricht. Der erste Hash der ersten Software wird vom ersten Sub-System an das zweite Sub-System übermittelt, welches eine zweite Signatur aufweist, die dem ersten Hash der ersten Software entspricht. Durch einen Vergleich der entsprechenden Hashs wird dann die Authentizitätsvalidierungsprüfung durchgeführt.

Ferner offenbart die US 2018/113703 A1 ein Verfahren zum Aktualisieren der Software eines Fahrzeugsteuergeräts. Zum Validieren, dass die Aktualisierung von einer vertrauenswürdigen Quelle stammt, werden aus dem Programmcode des vollständigen Programms Hashwerte gebildet und für diese Hashwerte eine Signatur bestimmt. Diese Signatur wird anschließend mit einer Referenzsignatur verglichen, welche von einer externen Softwareaktualisierungsentität bezogen wird. Da das Berechnen von Hashwerten aus Daten zeitaufwändig ist, werden die Hashwerte bereits vor dem Durchführen der eigentlichen Softwareaktualisierung generiert und in einem Testdatenblock für eine spätere Verwendung abgelegt.

Ferner offenbart die US 2007/192610 A1 ein Verfahren und eine Vorrichtung zum abgesicherten Hochfahren von einem externen Speichergerät. Zum Validieren, dass eine zu ladende Software vertrauenswürdig ist, wird ein Hashwert für die entsprechende Software berechnet und mit einem sicher in einem nicht-überschreibbaren Datenspeicher abgelegten Referenzhash verglichen. Um Zeit beim Berechnen des Hashwerts zu sparen, wird der Hashwert für die Software nicht später separat, sondern bereits beim Laden der Software berechnet.

Ferner offenbart die US 2018/183605 A1 eine Softwareverteilungsgerät und Softwareverteilungsverfahren sowie ein Fahrzeug. Die Druckschrift beschreibt ebenfalls das Validieren der Vertrauenswürdigkeit einer Software durch den Vergleich eines aus der Software gebildeten Hashwerts mit einem von einer externen Quelle bezogenen Referenzhash.

Zudem ist aus der US 2020/0314096 A1 das Validieren eines Fahrzeugsteuergeräts bekannt.

Der vorliegenden Erfindung liegt die Aufgabe zugrunde, ein Verfahren zur Überprüfung digitaler Signaturen anzugeben, mit dessen Hilfe das Speichern, Auslesen und/oder Löschen von Daten in bzw. aus einem Speicherelement eines Flash-Speichers beschleunigt wird.

Erfindungsgemäß wird diese Aufgabe durch ein Verfahren zur Überprüfung digitaler Signaturen mit den Merkmalen des Anspruchs 1 gelöst. Vorteilhafte Ausgestaltungen und Weiterbildungen, sowie eine Fahrzeug-Recheneinheit mit einem Flash-Speicher und ein Fahrzeug mit einer solchen Fahrzeug-Recheneinheit ergeben sich aus den hiervon abhängigen Ansprüchen.

Bei einem Verfahren zur Überprüfung digitaler Signaturen der eingangs genannten Art wird ein zur Erzeugung einer Signatur verarbeiteter Hash durch das Anwenden einer Hashfunktion auf in einem Flash-Speicher abgelegte Daten erstellt. Erfindungsgemäß werden dabei zumindest die folgenden Verfahrensschritte ausgeführt:
- Schreiben von Daten in zumindest ein Speicherelement des Flash-Speichers;
- für jeden beschriebenen Block des Flash-Speichers: Berechnen eines Hash aus den in den jeweiligen Block geschriebenen Daten durch einen Speicher-Controller des Flash-Speichers und Ablegen des errechneten Hash, gemeinsam mit den Daten, in den Block;
- Berechnen eines Verifikations-Hashs durch Anwenden einer Hashfunktion auf zumindest einen in einem Block abgelegten Hash durch den Speicher-Controller;
- Auslesen zumindest eines in einem Block abgelegten Hashs und des Verifikations-Hashs für die Blöcke, deren Signatur zu überprüfen ist, durch ein dem Flash-Speicher übergeordnetes System;
- Berechnen eines Prüf-Hash durch Anwenden einer Hashfunktion auf zumindest den einen ausgelesenen Hash durch das dem Flash-Speicher übergeordnete System;
- Vergleichen des berechneten Prüf-Hash mit dem ausgelesenen Verifikations-Hash; und
- bei einer Übereinstimmung des Prüf-Hash mit dem Verifikations-Hash: Bestätigen der Signatur.

Mit Hilfe des erfindungsgemäßen Verfahrens wird das Überprüfen digitalen Signaturen in einem Flash-Speicher abgelegter Daten beschleunigt. Hierdurch lassen sich die entsprechenden Daten aus dem Flash-Speicher schneller auszulesen bzw. überschreiben. Ein entsprechendes Computersystem bzw. Recheneinheit kann somit schneller booten, eine auszuführende Software schneller laden oder eine auf dem Flash-Speicher abgelegte Software schneller aktualisieren. Kerngedanke ist, dass zur Erzeugung des Prüf-Hash nicht mehr ein Hash über die im Flash-Speicher abgelegten Daten erzeugt werden muss, sondern nur noch der Prüf-Hash durch Anwenden einer Hashfunktion auf den/die gespeicherten Hash(s) berechnet wird. Die Hashes lassen sich aufgrund einer geringeren Datenmenge schneller aus dem Flash-Speicher auslesen, als die zur Ausbildung der Software verwendeten Daten.

Als Hashfunktion kann eine beliebige kryptographische Hashfunktion wie HAVAL, Whirlpool oder Secure Hash Algorithm (SHA), insbesondere SHA2 oder SHA3, verwendet werden.

Die einzelnen in den Blöcken gespeicherten Hashes, sowie der Verifikations-Hash werden dabei vom Flash-Speicher selbst, genauer vom Speicher-Controller des Flash-Speichers, berechnet. Der Verifikations-Hash kann in einem beliebigen Block eines Speicherelements des Flash-Speichers abgelegt werden. Da der Speicher-Controller ein entsprechendes Speicherelement adressiert, weiß der Speicher-Controller auch wo er den Verifikations-Hash auslesen muss, sobald eine entsprechende Anfrage hierzu vorliegt. Der Flash-Speicher ist in ein übergeordnetes System integriert. Bei dem übergeordneten System handelt es sich um eine Recheneinheit. Die Recheneinheit umfasst einen Prozessor zum Ausführen der in Form von Daten auf dem Flash-Speicher abgelegten Software. Auch ist es möglich, dass das den Flash-Speicher übergeordnete System mit einer weiteren Recheneinheit in Kommunikationsverbindung steht. So können Daten aus dem Flash-Speicher ausgelesen werden und von dem übergeordneten System an die weitere Recheneinheit weitergeleitet werden. Entsprechend können Daten von der weiteren Recheneinheit an das übergeordnete System übermittelt werden und so in den Flash-Speicher zum Ablegen übertragen werden. So lassen sich beispielsweise Softwareaktualisierungen der auf dem übergeordneten System ausführbaren Software einspielen.

Handelt es sich bei dem Flash-Speicher übergeordneten System beispielsweise um ein Fahrzeugsteuergerät, welches gebootet werden soll, so wird eine entsprechende in Form von Daten auf dem Flash-Speicher gespeicherte Software ausgelesen und vom Prozessor ausgeführt. Zum Auslesen der entsprechenden Software muss jedoch eine erfolgreiche Signaturprüfung erfolgen, um zu verhindern, dass potentiell manipulierte Daten, und somit eine kompromittierte, in das Fahrzeugsteuergerät eingeschleuste Software, ausgeführt wird. Mit Hilfe des erfindungsgemäßen Verfahrens ist es zur Signaturprüfung somit nicht mehr vonnöten zur Berechnung des Prüf-Hash die jeweiligen Daten aus den Blöcken auszulesen und daraus den Prüf-Hash zu berechnen, sondern lediglich den/die bereits vom Flash-Speicher errechneten und im Flash-Speicher abgelegten Hash(es) auszulesen und durch Anwenden der Hashfunktion auf den/die aus den Blöcken ausgelesenen Hash(es) den Prüf-Hash zu berechnen. Dies geht wesentlich schneller. Somit lässt sich das dem Flash-Speicher übergeordnete System schneller booten, eine entsprechende Software schneller starten und ausführen bzw. eine Softwareaktualisierung schneller installieren.

Wird eine Softwareaktualisierung installiert, so werden die Daten bzw. ein Teil der Daten in den einzelnen Blöcken des Speicherelements des Flash-Speichers durch neue Daten ausgetauscht bzw. ergänzt. Da sich die Daten ändern, ändert sich auch der entsprechende Hash eines entsprechenden, geänderte Daten umfassenden Blocks. Werden neue bzw. geänderte Daten in einen Block geschrieben, so berechnet auch der Flash-Speicher, sprich der Speicher-Controller, einen neuen Hash für diesen Block. Entsprechend ist es auch erforderlich, einen neuen Verifikations-Hash zu berechnen, da sich der/die dem Verifikations-Hash zugrunde liegenden Hash(es) geändert haben. Dabei kann es erforderlich sein die Firmware des Flash-Speichers und/oder des dem Flash-Speicher übergeordneten Systems zu ändern, damit der Speicher-Controller die errechneten Hashes im Speicherelement des Flash-Speichers ablegen kann beziehungsweise, dass pro Block der jeweils im Block gespeicherte Hash ausgelesen werden kann.

Eine vorteilhafte Weiterbildung des erfindungsgemäßen Verfahrens sieht vor, dass die Signatur zumindest eines Blockes überprüft wird, um die im Block gespeicherten Daten auszulesen und/oder zu überschreiben. Wie bereits erwähnt, lässt sich hierdurch das Implementieren bzw. Ausführen kompromittierter Software in einem Fahrzeugsteuergerät verhindern.

Entsprechend einer weiteren vorteilhaften Ausgestaltung des Verfahrens wird für zumindest eine beschriebene Seite eines Blocks des Flash-Speichers, sprich des entsprechenden Speicherelements, ein individueller Seiten-Hash erzeugt und auf der jeweiligen Seite abgelegt. Daten werden im Speicherelement des Flash-Speichers immer blockweise und je Block in Form von Seiten gespeichert. Zum Vorsehen zumindest eines Hashes für einen Block kann der entsprechende Hash auf einer beliebigen Seite des jeweiligen Blocks abgelegt werden. Es kann jedoch auch für eine, mehrere oder jede beschriebene Seite eines Blocks ein eigener Hash erzeugt werden. Entsprechend kann dann zur Erzeugung des Verifikations-Hash eine Hashfunktion auf einen Seiten-Hash, mehrere Seiten-Hashes oder sämtliche Seiten-Hashes eines Blocks angewendet werden. Auch kann aus einem oder mehreren Seiten-Hashes ein Hash für den entsprechenden Block berechnet werden und dieser aus zumindest einem Seiten-Hash errechnete Block-Hash dann zur Berechnung des Verifikations-Hash verwendet werden.

Es sind generell beliebige Kombinationen von Seiten- und/oder Block-Hashes zur Berechnung des Verifikations-Hashes möglich. Jedoch muss das den Prüf-Hash berechnende System über eine Information verfügen, welche Hashes zum Berechnen verwendet werden, um eine Übereinstimmung zwischen dem Verifikations-Hash und dem Prüf-Hash erzielen zu können.

Entsprechend einer weiteren vorteilhaften Ausgestaltung des erfindungsgemäßen Verfahrens wird bei einer anstehenden Überprüfung der Signaturen wenigstens zweier Blöcke die Signatur eines jeweiligen Blocks separat überprüft. Ist eine Software so groß, dass der entsprechende Code in mehreren Blöcken gespeichert werden muss, so muss auch jeder Block, beziehungsweise die dort abgelegten Daten, auf Integrität geprüft werden. Dies kann für jeden Block individuell erfolgen. So wird für jeden Block aus einem für den jeweiligen Block repräsentativem Hash (gegebenenfalls unter Einbeziehen von Seiten-Hashes) vom Speicher-Controller ein Verifikations-Hash berechnet und in dem entsprechenden Block abgelegt. Analog berechnet das dem Flash-Speicher übergeordnete System aus den für die jeweiligen Blöcke repräsentativen Hashes für jeden Block einen Prüf-Hash und vergleicht diese mit den jeweiligen Verifikations-Hashes. Dies erlaubt eine besonders sichere Signaturprüfung. Wurden Daten manipuliert, so können hierdurch direkt die Blöcke mit dem korrumpierten Daten identifiziert werden.

Eine weitere vorteilhafte Ausgestaltung des erfindungsgemäßen Verfahrens sieht vor, dass bei einer anstehenden Signaturüberprüfung wenigstens zweier Blöcke auch das Überprüfen einer gemeinsamen Blocksignatur möglich ist. Hierzu wird aus den jeweiligen Hashes der Blöcke ein gemeinsamer Verifikations-Hash errechnet. Hierdurch kann die erforderliche Zeitdauer zum Auslesen der Daten aus den entsprechenden Blöcken noch weiter verkürzt werden, da die Signatur der entsprechenden Blöcke noch schneller überprüft werden kann. Dabei ist es möglich, dass der Flash-Speicher für mehrere Blöcke eine gemeinsame Signatur bereits erzeugt, sprich den entsprechenden gemeinsamen Verifikations-Hash, bevor Daten aus den entsprechenden Blöcken ausgelesen werden sollen. Dies ist beispielsweise beim initialen Abspeichern, sprich Installieren einer Software im Flash-Speicher möglich. So weiß der Speicher-Controller, welche Daten zu der entsprechenden Software gehören und welche Blöcke entsprechend beim Laden der Software ausgelesen werden müssen. Für diese Blöcke kann der Speicher-Controller dann vorab den gemeinsamen Verifikations-Hash aus den einzelnen Block-Hashes errechnen.

Bei der Installation eines Updates kann es jedoch erforderlich sein, nur einzelne Codebausteine der Software auszutauschen. Diese können dann in beliebigen Blöcken und Seiten gespeichert sein. Der Speicher-Controller kann somit vorab nicht wissen, auf welche Blöcke und Seiten er zugreifen muss. Somit kann eine mögliche Ausgestaltung des Verfahrens es auch vorsehen, dass der Speicher-Controller den entsprechenden Verifikations-Hash auch erst bei einer anstehenden Anfrage zum Auslesen bzw. Schreiben von Daten aus verschiedenen Blöcken erzeugen.

Das Auslesen und/oder Überschreiben von den unterschiedlichen Blöcken und Seiten gespeicherten Daten ist insbesondere relevant zur Installation von differentiellen Softwareaktualisierungen. So erfolgt bevorzugt eine Signaturprüfung während der Durchführung einer differentiellen Softwareaktualisierung einer auf der den Flash-Speicher übergeordneten System ausführbaren Software. Bei einer differentiellen Softwareaktualisierung handelt es sich um ein Softwareupdate, bei dem lediglich geänderte Codebausteine ausgetauscht werden. Hierdurch kann eine Größe der entsprechenden Softwareaktualisierung verringert werden. Somit müssen auch weniger Daten geschrieben werden, was die Zeitdauer zum Installieren der Softwareaktualisierung verkürzt.

Bei einer Fahrzeug-Recheneinheit mit einem Flash-Speicher ist erfindungsgemäß der Flash-Speicher zur Durchführung des im vorigen beschriebenen Verfahrens eingerichtet. Bei der Fahrzeug-Recheneinheit kann es sich um eine beliebige Recheneinheit handeln. Beispielsweise kann es sich bei der Fahrzeug-Recheneinheit um einen zentralen Bordcomputer, eine Telematikeinheit oder um ein beliebiges Steuergerät eines Fahrzeuguntersystems handeln. Der Flash-Speicher kann als NAND-Flash oder NOR-Flash ausgeführt sein. Der Flash-Speicher kann ein oder mehrere Speicherelemente aufweisen. Ein entsprechendes Speicherelement setzt sich aus mehreren Blöcken zusammen, in denen Daten seitenweise in Speicherzellen gespeichert werden. Ein Speicherelement kann eine beliebige Größe aufweisen. Beispielsweise kann ein Speicherelement eine Größe von 100 KB, 64 MB, 1 GB, 128 GB, 1TB oder dergleichen aufweisen. Der Flash-Speicher umfasst ferner einen Speicher-Controller zum Adressieren der entsprechenden Speicherelemente. Die Fahrzeug-Recheneinheit kann mit weiteren Fahrzeug-Recheneinheiten in Kommunikationsverbindung stehen. So können beispielsweise von einem Kommunikationsmodul Softwareupdates over-the-air empfangen werden und zum Einspielen einer Softwareaktualisierung, beispielsweise einer Motorsteuersoftware, weitergeleitet werden.

Erfindungsgemäß umfasst ein Fahrzeug ein im vorigen beschriebene Fahrzeug-Recheneinheit. Bei dem Fahrzeug kann es sich um ein beliebiges Fahrzeug wie einen PKW, LKW, Transporter, Bus oder dergleichen handeln. Mit Hilfe des erfindungsgemäßen Verfahrens und der erfindungsgemäßen Fahrzeug-Recheneinheit lässt sich der Bootvorgang bzw. der Ladevorgang von Software im Fahrzeug beschleunigen. Zudem lassen sich auch Softwareaktualisierungen schneller in eine entsprechende Fahrzeug-Recheneinheit bzw. den Flash-Speicher der Fahrzeug-Recheneinheit implementieren. Da weiterhin eine Signaturüberprüfung zum Zugreifen auf den Flash-Speicher durchgeführt wird, bleibt die Cybersicherheit der entsprechenden Fahrzeug-Recheneinheit erhalten.

Weitere vorteilhafte Ausgestaltungen des erfindungsgemäßen Verfahrens zur Überprüfung digitaler Signaturen, der Fahrzeug-Recheneinheit und des Fahrzeug ergeben sich auch aus den Ausführungsbeispielen, welche nachfolgend unter Bezugnahme auf die Figuren näher beschrieben werden.

Dabei zeigen:
- Fig. 1: eine schematische Draufsicht auf eine Fahrzeug-Recheneinheit;
- Fig. 2: eine Prinzipdarstellung eines Speicheraufbaus eines Speicherelements eines Flash-Speichers; und
- Fig. 3: ein schematischer Ablauf einer Signaturprüfung zum Lese- und/oder Schreibzugriff auf den Flash-Speicher.

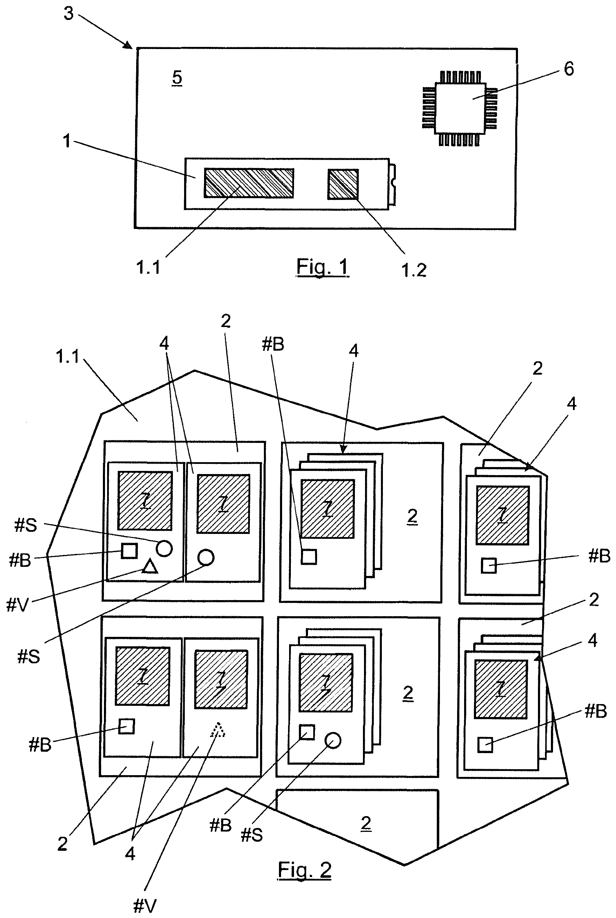

Figur 1 zeigt eine Fahrzeug-Recheneinheit 5, beispielsweise ein Motorsteuergerät oder ein zentraler Bordcomputer. Die Fahrzeug-Recheneinheit 5 umfasst wenigstens einen Flash-Speicher 1 und stellt damit ein dem Flash-Speicher 1 übergeordnetes System 3 dar. Ferner umfasst die Fahrzeug-Recheneinheit 5 einen Prozessor 6 zur Ausführung von auf dem Flash-Speicher 1 gespeicherten Programmcode.

Der Flash-Speicher 1 umfasst zudem wenigstens ein Speicherelement 1.1 sowie einen Speicher-Controller 1.2. Auf einem Speicherelement 1.1 werden Daten gespeichert. Der Speicher-Controller 1.2 adressiert dabei die jeweiligen Speicherelemente 1.1, so dass bei einem Schreib-, beziehungsweise Lesezugriff auf den Flash-Speicher 1 auch die richtigen Daten adressiert werden.

Figur 2 verdeutlicht den Aufbau eines Speicherelements 1.1. So umfasst ein Speicherelement 1.1 eine Vielzahl an Blöcken 2, in denen abzuspeichernde Daten seitenweise, sprich in Form wenigstens einer Seite 4, abgelegt werden. Dabei kann ein Flash-Speicher nur seitenweise beschrieben und blockweise gelöscht werden.

Zur Erhöhung der Cybersicherheit erfolgt eine Signaturprüfung vor einem Schreib- bzw. Lesezugriff auf die im Flash-Speicher 1 abgelegten Daten. Das Überprüfen von Signaturen erfordert den Vergleich von Hash-Werten. Gemäß dem Stand der Technik wird hierzu aus den im Flash-Speicher 1 abgelegten Daten wenigstens ein Hash-Wert berechnet und dieser abgespeichert. Soll nun ein Zugriff auf die Daten erfolgen, so berechnet ein auf die Daten zugreifender Prozessor ebenfalls aus den ausgelesenen Daten einen Hash-Wert. Dieser Hash-Wert wird mit dem vorher berechneten Hash-Wert verglichen. Stimmen beide Hash-Werte überein, so wird die Signaturprüfung bestätigt. Hierzu ist jedoch vergleichsweise viel Zeit erforderlich, da bei jedem Lese- bzw. Schreibzugriff auf die Daten aus den Daten erneut ein Hash-Wert berechnet werden muss.

Gemäß eines erfindungsgemäßen Verfahrens berechnet der Flash-Speicher 1, sprich der Speicher-Controller 1.2, beim Schreiben der Daten in den Flash-Speicher 1 zumindest für jeden Block 2 einen Hash und legt diesen gemeinsam mit den zu schreibenden Daten im jeweiligen Block 2 ab. Die dem erfindungsgemäßen Verfahren zugrunde liegende Idee sieht vor, dass zur Berechnung der Hashes, die zur Signaturprüfung verwendet werden, nun nicht mehr die im Flash-Speicher 1 abgelegten Daten in eine entsprechende Hashfunktion eingelesen werden, sondern die vom Flash-Speicher 1 berechneten Hashes. Der Vorteil liegt darin, dass das Einlesen der vom Flash-Speicher 1 berechneten Hashes sehr viel schneller geht, als das Einlesen der Daten an sich. Somit kann die Signaturprüfung sehr viel schneller erfolgen.

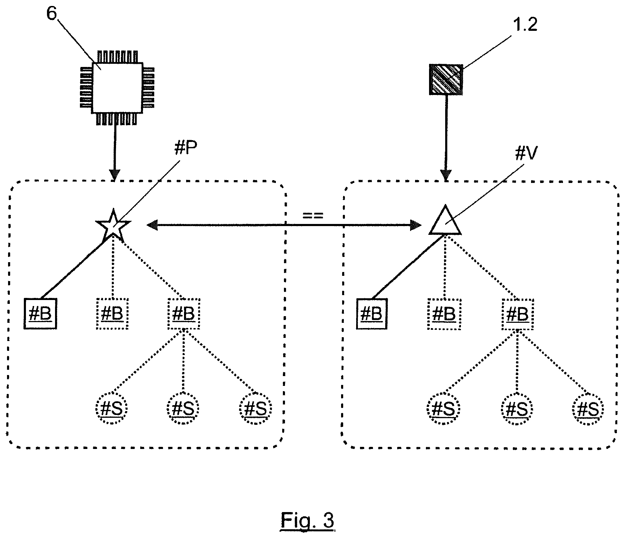

Zur Signaturprüfung wird ein Prüf-Hash #P (siehe Figur 3) mit einem Verifikations-Hash #V verglichen. Der Verifikations-Hash #V wird aus wenigstens einem Block-Hash #B berechnet. So wird wenigstens ein Block-Hash #B in eine Hashfunktion eingelesen und aus dieser der Verifikations-Hash #V abgeleitet. Ein jeweiliger Block-Hash #B und der Verifikations-Hash #V werden auf einer Seite 4 eines Blocks 2 abgelegt. Hierzu kann generell eine beliebige Seite 4 verwendet werden. So kann der Verifikations-Hash #V, wie in Figur 2 durch ein gestricheltes Dreieck angedeutet, auch auf einer anderen Seite 4 abgelegt werden als der Block-Hash #B des entsprechenden Blocks 2.

Auch ist es möglich, dass beim Schreiben der Daten in den Flash-Speicher 1 für wenigstens eine Seite 4 eines Blocks 2 ein einzelner Seiten-Hash #S erzeugt wird. So wird jeweils auf den Seiten 4 ein gewisser Bruchteil von Nutzdaten 7, sprich der Code zur Realisierung eines Programms, gespeichert. Der Flash-Speicher 1, sprich der Speicher-Controller 1.2, liest die Nutzdaten 7 als Eingangsgröße in eine Hashfunktion ein und errechnet daraus die jeweiligen Block-Hashes #B und/oder Seiten-Hashes #S.

Die Nutzdaten 7 werden, gegebenenfalls mit den Seiten-Hashes #S, auf einer jeweiligen Seite 4 gespeichert. Ist der Schreibvorgang abgeschlossen, so wird für die entsprechenden Blöcke 2 aus den jeweiligen Block-Hashes #B der Verifikations-Hash #V mit Hilfe einer weiteren Hashfunktion bestimmt. Der Verifikations-Hash #V wird dann ebenfalls auf einer beliebigen Seite 4 eines beliebigen Blocks 2 gespeichert. Die einzelnen zur Berechnung der Hashes verwendeten Hashfunktionen können identisch sein oder sich unterscheiden. Dabei können sie sich auch in ihrer Mächtigkeit unterscheiden.

Es können zur Berechnung des Verifikations-Hash #V auch Blöcke 2 kombiniert werden, deren Block-Hashes #B unterschiedlich berechnet wurden. So können bei einer ersten Anzahl an Blöcken 2 die jeweiligen Block-Hashes #B aus den Nutzdaten 7 berechnet worden sein und bei einer zweiten Anzahl an Blöcken 2 die jeweiligen Block-Hashes #B aus Seiten-Hashes #S berechnet worden sein.

Figur 3 zeigt nun einen schematischen Ablauf der Signaturprüfung. So berechnet zuerst der Flash-Speicher 1 bzw. genauer gesagt der Speicher-Controller 1.2 aus den in dem Flash-Speicher 1 zu schreibenden Daten blockindividuell Block-Hashes #B. Dabei kann ein Block-Hash #B entweder aus den Nutzdaten 7 direkt oder aber aus den Seiten-Hashes #S berechnet werden. Aus wenigstens einem Block-Hash #B wird dann der Verifikations-Hash #V berechnet und ebenfalls in einem Block 2 abgelegt. Da theoretisch lediglich ein Block-Hash #B zur Berechnung des Verifikations-Hash #V ausreicht, ist in Figur 3 nur ein Block-Hash #B mit einer durchgezogenen Linie mit dem Verifikations-Hash #V verbunden. Die gestrichelten Linien symbolisieren, dass zur Berechnung des Verifikations-Hash #V die Verwendung mehrere Block-Hashes #B und/oder Seiten-Hashes #S optional ist, beziehungsweise nur in Frage kommt, wenn so viele Nutzdaten 7 geschrieben/gelesen werden müssen, dass diese in mehrere Blöcke 2 zu schreiben beziehungsweise aus diesen auszulesen sind.

Soll nun ein Zugriff auf die Nutzdaten 7 erfolgen, sei es zum Lesen, Schreiben und/oder Löschen, so berechnet ein Prozessor 6 einer auf die Daten zugreifenden Recheneinheit, beispielsweise die Fahrzeug-Recheneinheit 5, einen zweckmäßigerweise dem Verifikations-Hash #V entsprechenden Prüf-Hash #P. Entspricht der Prüf-Hash #P dem Verifikations-Hash #V, dann ist die Signaturprüfung erfolgreich. Stimmen Prüf-Hash #P und Verifikations-Hash #V hingegen nicht überein, so deutet dies auf eine Manipulation der Nutzdaten 7 hin, woraufhin die Signaturprüfung abgelehnt wird.

Zum Berechnen des Prüf-Hashes #P verwendet der Prozessor 6 dieselben Hashfunktionen wie der Flash-Speicher 1. Zum Berechnen des Prüf-Hash #P werden nun anstelle der Nutzdaten 7 entsprechend des erfindungsgemäßen Verfahrens die Seiten-Hashes #S und/oder Block-Hashes #B von der auf den Flash-Speicher 1 zugreifenden Recheneinheit aus dem Flash-Speicher 1 ausgelesen. Kam es zwischen dem initialen Abspeichern der Daten auf dem Flash-Speicher 1 und dem Auslesen durch die entsprechende Recheneinheit zu einer Kompromittierung der jeweiligen Daten, so stimmen die jetzt aus dem Flash-Speicher 1 ausgelesenen Hashes nicht mehr mit den ursprünglichen Hashes überein, da der Speicher-Controller 1.2 beim Schreiben von Daten neue Block-Hashes #B berechnet. Da der Verifikations-Hash #V beim Manipulationsvorgang jedoch nicht verändert wurde, führt dies dazu, dass der Prüf-Hash #P, bei erfolgter Manipulation der Daten, nicht mit dem Verifikations-Hash #V übereinstimmt.

Werden die im Flash-Speicher 1 gespeicherten Daten hingegen von einer vertrauenswürdigen Quelle verändert, so wird nach erfolgreicher Signaturprüfung auch der Verifikations-Hash #V erneut berechnet.

Ein Kompromittieren der zwischen der Recheneinheit und dem Flash-Speicher 1 ausgetauschten Hash-Werte lässt sich verhindern, indem in der Signaturprüfung bewährte Verschlüsselungstechnik, wie das Ver- und Entschlüsseln mit privatem und öffentlichem Schlüssel, eingesetzt werden.

## Patentansprüche

1. Verfahren zur Überprüfung digitaler Signaturen, wobei ein zur Erzeugung einer Signatur verarbeiteter Hash durch das Anwenden einer Hashfunktion auf in einem Flash-Speicher (1) abgelegte Daten erstellt wird,
**gekennzeichnet durch**
zumindest die folgenden Verfahrensschritte:
- Schreiben von Daten in zumindest ein Speicherelement (1.1) des Flash-Speichers (1);
- Für jeden beschriebenen Block (2) des Flash-Speichers (1): berechnen eines Hash aus den in den jeweiligen Block (2) geschriebenen Daten durch einen Speicher-Controller (1.2) des Flash-Speichers (1) und ablegen des errechneten Hash, gemeinsam mit den Daten in den Block (2);
- Berechnen eines Verifikations-Hash (#V) durch Anwenden einer Hashfunktion auf zumindest einen in einem Block (2) abgelegten Hash durch den Speicher-Controller (1.2);
- Auslesen zumindest eines in einen Block (2) abgelegten Hash und des Verifikations-Hash (#V) für die Blöcke (2) deren Signatur zu überprüfen ist durch ein dem Flash-Speicher (1) übergeordnetes System (3);
- Berechnen eines Prüf-Hash (#P) durch Anwenden einer Hashfunktion auf zumindest den einen ausgelesenen Hash durch das dem Flash-Speicher (1) übergeordnete System (3);
- Vergleichen des berechneten Prüf-Hash (#P) mit dem ausgelesenen Verifikations-Hash (#V); und
- Bei einer Übereinstimmung des Prüf-Hash (#P) mit dem Verifikations-Hash (#V): Bestätigen der Signatur.

2. Verfahren nach Anspruch 1,
**dadurch gekennzeichnet, dass**
die Signatur zumindest eines Blocks (2) überprüft wird, um die im Block (2) gespeicherten Daten auszulesen und/oder zu überschreiben.

3. Verfahren nach Anspruch 1 oder 2,
**dadurch gekennzeichnet, dass**
für wenigstens eine beschriebene Seite (4) eines Blocks (2) des Flash-Speichers (1) ein individueller Seiten-Hash (#S) erzeugt und auf der jeweiligen Seite (#S) abgelegt wird.

4. Verfahren nach Anspruch 3,
**dadurch gekennzeichnet, dass**
zur Erzeugung des Hash eines Blocks (2) eine Hashfunktion auf wenigstens einen Seiten-Hash (#S) angewendet wird.

5. Verfahren nach einem der Ansprüche 1 bis 4,
**dadurch gekennzeichnet, dass**
bei einer anstehenden Überprüfung der Signaturen wenigstens zweier Blöcke (2) die Signatur eines jeweiligen Blocks (2) separat überprüft wird.

6. Verfahren nach einem der Ansprüche 1 bis 4,
**dadurch gekennzeichnet, dass**
für eine anstehenden Überprüfung der Signaturen wenigstens zweier Blöcke (2) mittels einer gemeinsame Signatur, ein Verifikations-Hash (#V) aus den beiden einzelnen Hashes der zu überprüfenden Blöcke (2) berechnet wird.

7. Verfahren nach einem der Ansprüche 1 bis 6,
**dadurch gekennzeichnet, dass**
eine Signaturprüfung während der Durchführung einer differentiellen Softwareaktualisierung einer auf der dem Flash-Speicher (1) übergeordneten System (3) ausführbaren Software erfolgt.

8. Fahrzeug-Recheneinheit (5) mit einem Flash-Speicher (1),
**dadurch gekennzeichnet, dass**
der Flash-Speicher (1) zur Durchführung eines Verfahrens nach einem der Ansprüche 1 bis 7 eingerichtet ist.

9. Fahrzeug,
**gekennzeichnet durch**
eine Fahrzeug-Recheneinheit (5) nach Anspruch 8.

## Claims

1. Method for verifying digital signatures, a hash that is processed in order to generate a signature being created by applying a hash function to data stored in a flash memory (1),
**characterized by**
at least the following method steps:
- writing data into at least one memory element (1.1) of the flash memory (1);
- for each written block (2) of the flash memory (1): calculating, by means of a memory controller (1.2) of the flash memory (1), a hash from the data written into the relevant block (2) and storing the calculated hash, together with the data, in the block (2);
- calculating, by means of the memory controller (1.2), a verification hash (#V) by applying a hash function to at least one hash stored in a block (2);
- reading out at least one hash stored in a block (2) and the verification hash (#V) for the blocks (2), the signature of which is to be verified by means of a system (3) which is of a higher level than the flash memory (1);
- calculating a check hash (#P) by applying a hash function to at least the one read-out hash by means of the system (3) which is of a higher level than the flash memory (1);
- comparing the calculated check hash (#P) with the read-out verification hash (#V); and
- if the check hash (#P) matches the verification hash (#V): confirming the signature.

2. Method according to claim 1,
**characterized in that**
the signature of at least one block (2) is verified in order to read out and/or overwrite the data stored in the block (2).

3. Method according to claim 1 or claim 2,
**characterized in that,**
for at least one described page (4) of a block (2) of the flash memory (1), an individual page hash (#S) is generated and stored on the relevant page (#S).

4. Method according to claim 3,
**characterized in that,**
in order to generate the hash of a block (2), a hash function is applied to at least one page hash (#S).

5. Method according to any of claims 1 to 4,
**characterized in that,**
in the event of a pending verification of the signatures of at least two blocks (2), the signature of a relevant block (2) is verified separately.

6. Method according to any of claims 1 to 4,
**characterized in that,**
for a pending verification of the signatures of at least two blocks (2) by means of a common signature, a verification hash (#V) is calculated from the two individual hashes of the blocks (2) to be verified.

7. Method according to any of claims 1 to 6,
**characterized in that**
a signature check takes place while performing a differential software update of software, which can be executed on the system (3) of a higher level than the flash memory (1).

8. Vehicle computing unit (5) comprising a flash memory (1),
**characterized in that**
the flash memory (1) is configured to carry out a method according to any of claims 1 to 7.

9. Vehicle,
**characterized by**
a vehicle computing unit (5) according to claim 8.

## Revendications

1. Procédé pour la vérification de signatures numériques, dans lequel un hachage traité pour la génération d'une signature est créé en appliquant une fonction de hachage à des données stockées dans une mémoire flash (1),
**caractérisé par**
au moins les étapes de procédé suivantes :
- écriture de données dans au moins un élément de mémoire (1.1) de la mémoire flash (1) ;
- pour chaque bloc (2) écrit de la mémoire flash (1) : calcul d'un hachage à partir des données écrites dans le bloc (2) respectif par une commande de mémoire (1.2) de la mémoire flash (1) et stockage du hachage calculé, conjointement avec les données dans le bloc (2) ;
- calcul d'un hachage de contrôle (#V) en appliquant une fonction de hachage à au moins un hachage stocké dans un bloc (2) par la commande de mémoire (1.2) ;
- lecture d'au moins un hachage stocké dans un bloc (2) et du hachage de contrôle (#V) pour les blocs (2) dont la signature doit être vérifiée par un système (3) supérieur à la mémoire flash (1) ;
- calcul d'un hachage de vérification (#P) en appliquant une fonction de hachage à au moins le hachage lu par le système (3) supérieur à la mémoire flash (1) ;
- comparaison du hachage de vérification (#P) calculé avec le hachage de contrôle (#V) lu ; et
- en cas de correspondance entre le hachage de vérification (#P) et le hachage de contrôle (#V) : confirmation de la signature.

2. Procédé selon la revendication 1,
**caractérisé en ce que**
la signature d'au moins un bloc (2) est vérifiée afin de lire et/ou d'écraser les données mémorisées dans le bloc (2).

3. Procédé selon la revendication 1 ou 2,
**caractérisé en ce que**
pour au moins une page (4) écrite d'un bloc (2) de la mémoire flash (1), un hachage de page (#S) individuel est généré et stocké sur la page (#S) respective.

4. Procédé selon la revendication 3,
**caractérisé en ce que**
pour la génération du hachage d'un bloc (2), une fonction de hachage est appliquée à au moins un hachage de page (#S).

5. Procédé selon l'une des revendications 1 à 4,
**caractérisé en ce que**
lors d'une vérification en attente des signatures d'au moins deux blocs (2), la signature d'un bloc (2) respectif est vérifiée séparément.

6. Procédé selon l'une des revendications 1 à 4,
**caractérisé en ce que**
pour une vérification en attente des signatures d'au moins deux blocs (2) au moyen d'une signature commune, un hachage de contrôle (#V) est calculé à partir des deux hachages individuels des blocs (2) à vérifier.

7. Procédé selon l'une des revendications 1 à 6,
**caractérisé en ce que**
une vérification de signature est effectuée pendant la mise en œuvre d'une mise à jour logicielle différentielle d'un logiciel exécutable sur le système (3) supérieur à la mémoire flash (1).

8. Unité de calcul de véhicule (5) comportant une mémoire flash (1),
**caractérisé en ce que**
la mémoire flash (1) est configurée pour la mise en œuvre d'un procédé selon l'une des revendications 1 à 7.

9. Véhicule,
**caractérisé par**
une unité de calcul de véhicule (5) selon la revendication 8.
